(19) Europäisches Patentamt
European Patent Office
Office européen des brevets

(11) **EP 1 497 713 B1**

(12) **EUROPÄISCHE PATENTSCHRIFT**

(45) Veröffentlichungstag und Bekanntmachung des Hinweises auf die Patenterteilung:
**01.08.2007 Patentblatt 2007/31**

(21) Anmeldenummer: **03735492.5**

(22) Anmeldetag: **28.05.2003**

(51) Int Cl.:
**G06F 9/302** *(2006.01)*

(86) Internationale Anmeldenummer:
**PCT/EP2003/005642**

(87) Internationale Veröffentlichungsnummer:
**WO 2003/104975 (18.12.2003 Gazette 2003/51)**

(54) **PROZESSOR UND VERFAHREN ZUM GLEICHZEITIGEN AUSFÜHREN EINER BERECHNUNG UND EINES KOPIERVORGANGS**

PROCESSOR AND METHOD FOR SIMULTANEOUSLY DOING A CALCULATION AND CARRYING OUT A COPYING PROCESS

PROCESSEUR ET PROCEDE PERMETTANT SIMULTANEMENT D'EFFECTUER UN CALCUL ET DE METTRE EN OEUVRE UN PROCESSUS DE COPIE

(84) Benannte Vertragsstaaten:
**DE FR**

(30) Priorität: **06.06.2002 DE 10225230**

(43) Veröffentlichungstag der Anmeldung:
**19.01.2005 Patentblatt 2005/03**

(73) Patentinhaber: **Infineon Technologies AG**
**81669 München (DE)**

(72) Erfinder:
- **ELBE, Astrid**
  **81243 München (DE)**
- **FISCHER, Wieland**
  **80469 München (DE)**
- **JANSSEN, Norbert**
  **81667 München (DE)**
- **SEDLAK, Holger**
  **82054 Sauerlach (DE)**
- **SEIFERT, Jean-Pierre**
  **INTEL Corp**
  **Hillsborough, OR 97124 (US)**

(74) Vertreter: **Schoppe, Fritz et al**
**Patentanwälte**
**Schoppe, Zimmermann, Stöckeler & Zinkler**
**Postfach 246**
**82043 Pullach bei München (DE)**

(56) Entgegenhaltungen:
EP-A- 0 967 544          US-A- 3 360 780
US-A1- 2002 010 847

**Beschreibung**

Die vorliegende Erfindung bezieht sich auf Prozessoren und insbesondere auf Prozessoren mit Langzahlrechenwerken, wie sie für kryptographische Anwendungen benötigt werden.

Die DE 3631992 C2 offenbart ein Verfahren, bei dem die modulare Multiplikation über Z/NZ unter Verwendung eines Multiplikations-Vorausschau-Verfahrens und unter Verwendung eines Reduktions-Vorausschau-Verfahrens beschleunigt werden kann. Das in der DE 3631992 C2 beschriebene Verfahren wird auch als ZDN-Verfahren bezeichnet und anhand von Fig. 6 näher beschrieben. Nach einem Startschritt 900 des Algorithmus werden die globalen Variablen M, C und N initialisiert. Ziel ist es, folgende modulare Multiplikation zu berechnen:

$$Z = C * M \bmod N.$$

M wird als der Multiplikator bezeichnet, während C als der Multiplikand bezeichnet wird. Z ist das Ergebnis der modularen Multiplikation, während N der Modul ist.

Hierauf werden verschiedene lokale Variablen initialisiert, auf die zunächst nicht näher eingegangen werden braucht. Anschließend werden zwei Vorausschau-Verfahren angewandt. Im Multiplikations-Vorausschau-Verfahren GEN_MULT_LA wird unter Verwendung verschiedener Look-Ahead-Regeln ein Multiplikations-Verschiebungswert $S_z$ sowie ein Multiplikations-Vorausschau-Parameter a berechnet (910). Hierauf wird der gegenwärtige Inhalt des Z-Registers einer Links-Verschiebungs-Operation um $s_z$-Stellen unterzogen (920).

Im wesentlichen parallel dazu wird ein Reduktions-Vorausschau-Verfahren GEN_Mod_LA (930) durchgeführt, um einen Reduktionsverschiebungswert $s_N$ und einen Reduktions-Parameter b zu berechnen. In einem Schritt 940 wird dann der gegenwärtige Inhalt des Modul-Registers, also N, um $s_N$ Stellen verschoben, um einen verschobenen Modulwert N' zu erzeugen. Die zentrale Drei-Operanden-Operation des ZDN-Verfahrens findet in einem Schritt 950 statt. Hierbei wird das Zwischenergebnis Z' nach dem Schritt 920 zu dem Multiplikanden C, der mit dem Multiplikations-Vorausschau-Parameter a multipliziert ist, und zu dem verschobenen Modul N', der mit dem Reduktions-Vorausschau-Parameter b multipliziert ist, addiert. Je nach aktueller Situation können die Vorausschau-Parameter a und b einen Wert von +1, 0 oder -1 haben.

Ein Fall besteht darin, daß der Multiplikations-Vorausschau-Parameter a +1 beträgt, und daß der Reduktion-Vorausschau-Parameter b -1 beträgt, so daß zu einem verschobenen Zwischenergebnis Z' der Multiplikand C hinzu addiert wird, und der verschobene Modul N' davon subtrahiert wird. a wird u. a. einen Wert gleich 0 haben, wenn das Multiplikations-Vorausschau-Verfahren mehr als eine voreingestellte Anzahl von einzelnen Links-Verschiebungen zulassen würde, also wenn $s_z$ größer als der maximal zulässige Wert von $s_z$ ist, der auch als k bezeichnet wird. Für den Fall, daß a gleich 0 ist, und daß Z' aufgrund der vorausgehenden modularen Reduktion, also der vorausgehenden Subtraktion des verschobenen Moduls noch ziemlich klein ist, und insbesondere kleiner als der verschobene Modul N' ist, muß keine Reduktion stattfinden, so daß der Parameter b gleich 0 ist.

Die Schritte 910 bis 950 werden so lange durchgeführt, bis sämtliche Stellen des Multiplikanden abgearbeitet sind, also bis m gleich 0 ist, und bis auch ein Parameter n gleich 0 ist, welcher angibt, ob der verschobene Modul N' noch größer als der ursprüngliche Modul N ist, oder ob trotz der Tatsache, daß bereits sämtliche Stellen des Multiplikanden abgearbeitet sind, noch weitere Reduktionsschritte durch Subtrahieren des Moduls von Z durchgeführt werden müssen.

Abschließend wird noch bestimmt, ob Z kleiner als 0 ist. Falls dies der Fall ist, muß, um eine abschließende Reduktion zu erreichen, der Modul N zu Z hinzuaddiert werden, damit schließlich das korrekte Ergebnis Z der modularen Multiplikation erhalten wird. In einem Schritt 960 ist die modulare Multiplikation mittels des ZDN-Verfahrens beendet.

Der Multiplikations-Verschiebungswert $s_z$ sowie der Multiplikations-Parameter a, welche im Schritt 910 durch den Multiplikations-Vorausschau-Algorithmus berechnet werden, ergeben sich durch die Topologie des Multiplikators sowie durch die eingesetzten Vorausschau-Regeln, die in der DE 3631992 C2 beschrieben sind.

Der Reduktions-Verschiebungswert $s_N$ und der Reduktions-Parameter b werden, wie es ebenfalls in der DE 3631992 C2 beschrieben ist, durch Vergleich des gegenwärtigen Inhalts des Z-Registers mit einem Wert 2/3 mal N bestimmt. Aufgrund dieses Vergleiches trägt das ZDN-Verfahren seinen Namen (ZDN = Zwei Drittel N) .

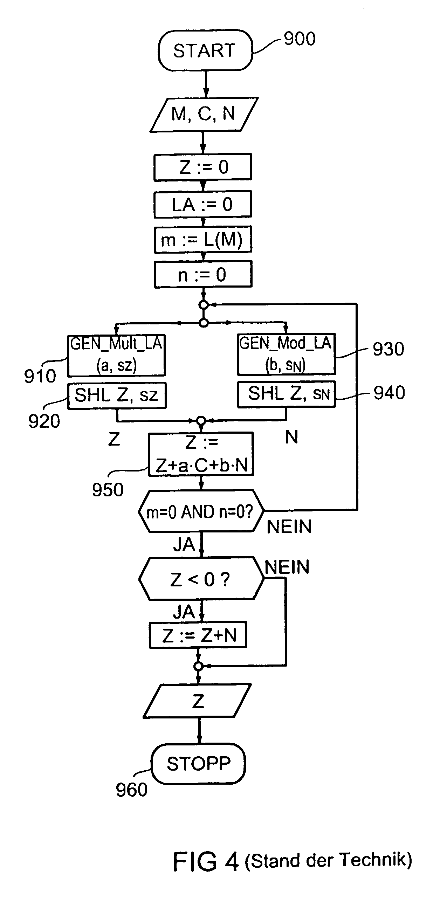

Das ZDN-Verfahren, wie es in Fig. 4 dargestellt ist, führt die modulare Multiplikation auf eine Drei-Operanden-Addition (Block 950 in Fig. 4) zurück, wobei zur Steigerung der Rechenzeiteffizienz das Multiplikations-Vorausschau-Verfahren und damit einhergehend das Reduktions-Vorausschau-Verfahren eingesetzt werden. Im Vergleich zur Montgomery-Reduktion für Z/NZ kann daher ein Rechenzeitvorteil um einen Faktor in der Größenordnung von 3 erreicht werden.

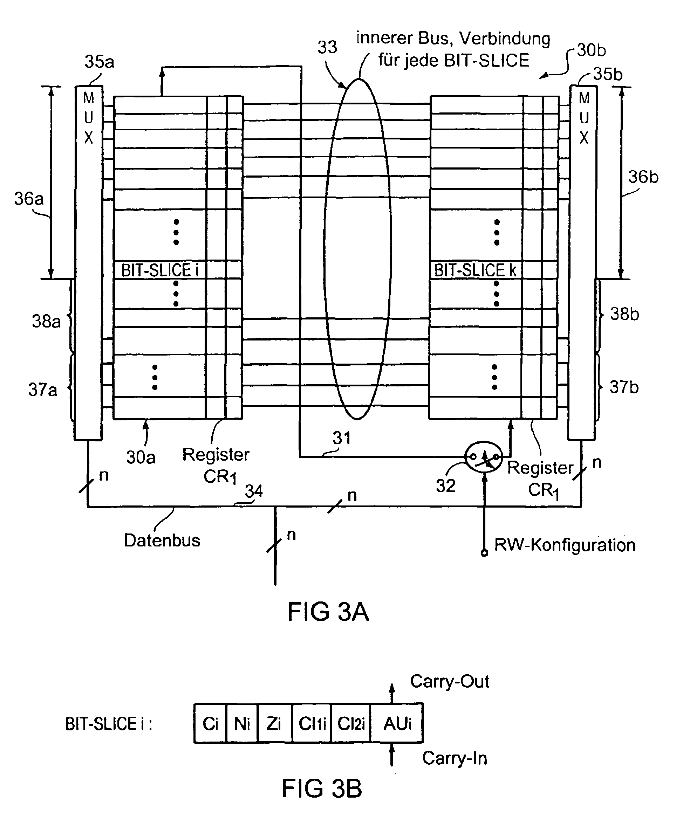

Zur Ausführung der Drei-Operanden-Addition im Block 950 von Fig. 4 könnte beispielsweise das in Fig. 3a gezeigte Rechenwerk eingesetzt werden. Das in Fig. 3a gezeigte Rechenwerk umfaßt ein erstes Teilrechenwerk 30a sowie ein zweites Teilrechenwerk 30b. Die Teilrechenwerke 30a, 30b bestehen aus aufeinandergestapelten Bit-Slices, die typischerweise alle identisch ausgeführt sind. Ein Übertragausgang des obersten Bit-Slices des Rechenwerks 30a ist über eine Übertragausgangsleitung 31 mit einem niederwertigsten Bit-Slice des zweiten Teilrechenwerks 30b über einen Konfigurationsschalter 32 verbunden. Ist der Konfigurationsschalter geschlossen, d. h. wird der Übertragausgang des obersten Bit-Slices des ersten Teilrechenwerks 30a in einen Übertrageingang des niederstwertigen Bit-Slices des zweiten Teilrechenwerks 30b eingespeist, so fungiert die Rechenwerksanordnung von Fig. 3a als ein komplettes Rechenwerk, dessen Länge gleich der Anzahl der Bit-Slices des ersten Teilrechenwerks 30a zuzüglich der Anzahl der Bit-Slices des zweiten Teilrechenwerks 30b ist.

Es sei darauf hingewiesen, daß die Anordnung der beiden Teilrechenwerke 30a und 30b in Fig. 3a der geometrischen Anordnung der Bit-Slices auf einer integrierten Schaltung entsprechen können. Jede Bit-Slice ist identisch aufgebaut, wie es in Fig. 3b gezeigt ist. Insbesondere umfaßt jeder Bit-Slice einen Registerplatz $C_i$ zum Speichern des Multiplikanden C, einen Registerplatz für ein Modulregister zum Speichern des entsprechenden Bits des Moduls N, einen Registerplatz zum Speichern des entsprechenden Bits i des Zwischenergebnisses Z sowie zwei Hilfsregister $CR_1$ und $CR_2$, wobei, wenn ein Bit-Slice betrachtet wird, jedes Register durch das Bit der entsprechenden Ordnung i "vertreten ist". Schließlich umfaßt jeder Bit-Slice auch eine arithmetische Einheit $AU_i$, die einen Übertrageingang aufweist, um einen Übertrag von der niedrigeren Stufe zu erhalten, und die einen Übertragausgang aufweist, um einen Übertrag zur nächsten Stufe auszugeben. Der Übertrageingang wird auch als Carry-In bezeichnet und der Übertragausgang wird auch als Carry-Out bezeichnet. Die Leitung 31 ist somit einerseits der Übertragausgang des höchstwertigen Bits des ersten Teilrechenwerks 30a und andererseits der Übertrageingang des niederstwertigen Bit-Slices des zweiten Teilrechenwerks 30b.

Durch Übereinanderstapeln der in Fig. 3b gezeigten Bit-Slices entsteht somit ein Langzahlrechenwerk mit z. B. mehr als 2.048 Bit-Slices, wobei das Langzahlrechenwerk slice-intern die Register C, N, Z, $CR_1$ und $CR_2$ aufweist, die ebenfalls jeweils mehr als 2.048 Bit lang sind.

Damit ist das in Fig. 3a gezeigte Langzahlrechenwerk in der Lage, die in dem Block 950 gezeigte Drei-Operanden-Addition schnell durchzuführen. Für einen multifunktionalen Prozessor, der beispielsweise als Krypto-Coprozessor in einer SmartCard einsetzbar ist, besteht der Wunsch, daß derselbe auch in der Lage ist, z. B. eine RSA-Berechnung oder eine Elliptische-Kurven-Kryptographieberechnung für deutlich kürzere Zahlen durchzuführen. So hat zwar eine RSA-Berechnung mit Schlüssellängen von 1.024 Bit eine geringere Sicherheit als eine RSA-Berechnung mit 2.048 Bit. In Fällen, wo die Sicherheit jedoch für 1.024 Bit ausreichend ist, sollte das in Fig. 3a gezeigte Rechenwerk ebenfalls effizient anwendbar sein. Aus diesem Zweck ist der Konfigurationsschalter 32 vorgesehen, um den Übertragpfad 31 zu unterbrechen. In diesem Fall entstehen aus dem Rechenwerk voller Länge zwei Teilrechenwerke 30a, 30b, die jedoch selbständig agieren können, um beispielsweise parallelisierbare Berechnungen in einem kryptographischen Algorithmus parallel auszuführen. Damit wird erreicht, daß mit dem Rechenwerk zwei parallele 1.024-Bit-Berechnungen ausführbar sind.

Oftmals verlangt ein Algorithmus, daß die Inhalte der Register C, N, Z, $CR_1$, $CR_2$ von dem einen Teilrechenwerk 30a in das andere Teilrechenwerk 30b oder umgekehrt kopiert werden müssen. Zu diesem Zweck wird ein innerer Bus 33 vorgesehen, der für jeden Bit-Slice des ersten Teilrechenwerks 30a eine Verbindungsleitung zur Bit-Slice entsprechender Ordnung des anderen Teilrechenwerks liefert. Damit kann auf schnelle Art und Weise der komplette Inhalt eines Registers im ersten Teilrechenwerk 30a in ein Register des zweiten Teilrechenwerks 30b geschrieben werden. Damit kann in einem Zyklus beispielsweise eine 1.024-Bit-Zahl in einem Register des Teilrechenwerks 30a in ein Register des Teilrechenwerks 30b geschrieben werden. Darüber hinaus ist ferner ein Datenbus mit einer Breite n vorgesehen (34), wobei die Breite n des Datenbusses kleiner ist als die Anzahl der Bit-Slices in einem Teilrechenwerk 30a oder 30b und insbesondere viel kleiner ist und z. B. lediglich 8 Bit beträgt. Der Datenbus 34 ist jedoch ausgebildet, um über Multiplexer 35a, 35b auf sämtliche Bit-Slices und insbesondere auf sämtliche Register der Bit-Slices beider Teilrechenwerke 30a, 30b zugreifen zu können.

Die Bedeutung des inneren Busses 33 einerseits und des Datenbusses 34 für einen Datentransfer wird anhand eines kleinen Zahlenbeispiels verdeutlicht. Es wird angenommen, daß jedes Teilrechenwerk 30a, 30b 1.024-Bit-Slices aufweist. Werden Registerdaten eines Teilrechenwerks über den Datenbus 34 in ein Register des anderen Teilrechenwerks geschrieben, so werden dafür 128 Zyklen benötigt, was mit Sicherheit nicht akzeptabel ist, da ein einfacher Ladebefehl (Load), Speicherbefehl (Store) oder Registeraustauschbefehl (Exchange) eine immense Zeit benötigen würde. Daher ist der innere Bus 33 vorgesehen, durch den die 1.024 Bit in einem Zyklus von einem Rechenwerk in das andere übertragen werden können.

Das in Fig. 3a gezeigte Rechenwerk erlaubt es somit, daß entweder ein Rechenwerk mit voller Länge oder daß zwei parallele Teilrechenwerke unabhängig voneinander betreibbar sind, wobei ferner ein schneller Registeraustausch zwischen den beiden Teilrechenwerken 30a und 30b möglich ist.

Insbesondere bei der Elliptische-Kurven-Kryptographie sind die Schlüssellängen deutlich kürzer und liegen im Bereich von z. B. 130 Bits. Wenn angenommen wird, daß sowohl das erste Teilrechenwerk 30a als Elliptische-Kurven-Kryptographie-Rechenwerk arbeiten soll, und das zweite Rechenwerk 30b ebenfalls als Elliptische-Kurven-Kryptographie-Rechenwerk arbeiten soll, so werden lediglich beispielsweise die obersten 130 Bit-Slices benötigt. Dieser aktive Teil des ersten Teilrechenwerks 30a ist in Fig. 3a mit 36a bezeichnet, während der aktive Teil des zweiten Teilrechenwerks 30b mit 36b bezeichnet ist. Der Rest der beiden Teilrechenwerke, also die Bit-Slices, die unterhalb des Bit-Slices i bzw. des Bit-Slices k liegen, werden somit nicht benötigt. Wenn beispielsweise davon ausgegangen wird, daß ein gesamtes Teilrechenwerk 1.024 Bits hat und daß lediglich die obersten 130 Bit benötigt werden, so bleiben 87 % des Registerplatzes jedes Teilrechenwerks ungenutzt. Insbesondere bei integrierten Schaltungen für Chipkarten ist dies besonders nachteilhaft, zumal die Speicherressourcen auf der Chipkarte ohnehin aufgrund enger Platzbeschränkungen sehr begrenzt sind.

So wäre es zwar denkbar, den gesamten Rest des ersten Teilrechenwerks 30a als Register freizugeben, obgleich die arithmetischen Einheiten der Bit-Slices nicht benötigt werden, und den gesamten Rest des zweiten Teilrechenwerks 30b als Register freizugeben, obgleich auch hier die arithmetischen Einheiten nicht benötigt werden. In diesem Fall wäre nach wie vor über die inneren Busverbindungen 33 eine schnelle Registerkopie von einem Register des ersten Teilrechenwerks in ein Register des zweiten Teilrechenwerks möglich.

Andererseits haben jedoch kryptographische Algorithmen, die mit kürzeren Schlüsseln auskommen, wie z. B. die Elliptische-Kurven-Kryptographie (ECC; ECC = Elliptic Curve Cryptography) oftmals die Eigenschaft, daß sie sehr viele Operanden benötigen.

Daher wäre es wünschenswert, den nicht aktiven Bereich sowohl des ersten Teilrechenwerks 30a als auch des zweiten Teilrechenwerks 30b jeweils in weitere Einheiten zu unterteilen, um zusätzliche Register zu definieren. Diese zusätzlichen Register werden durch die mit 37a, 37b bzw. 38a und 38b bezeichneten Bit-Slice-Unterstapel realisiert. Aus Fig. 3a ist jedoch ersichtlich, daß keine Möglichkeit für einen breitbandigen Datenaustausch zwischen den neu definierten Registern 37a und 38a möglich ist. Darüber hinaus ist kein breitbandiger Datenaustausch zwischen beispielsweise dem Register 38a des ersten Teilrechenwerks 30a und dem Register 37b des zweiten Teilrechenwerks 30b möglich. Solche Register können lediglich über den Datenbus 34 miteinander kommunizieren, was insbesondere dahingehend nachteilhaft ist, daß der Datenbus 34 schmalbandig ist. Beispielhaft ausgedrückt würde dann, wenn z. B. das Register 38a 130 Bit breit ist und das Register 37b ebenfalls 130 Bit breit ist, ein Datenaustausch vom Register 38a zum Register 37b über den Datenbus 34 17 Zyklen erfordern, was aus Zeitgründen nicht tolerabel ist. Sind die Register 38a und 37b länger als 130 Bit, so nimmt die Anzahl der Zyklen zum Datenaustausch zwischen diesen Registern über den Datenbus 34 entsprechend zu.

Die weitere Unterteilung der nichtaktiven Bereiche der Teilrechenwerke scheidet somit aus Performancegründen aus oder führt, wenn die Registeraufteilung dennoch durchgeführt wird, zu einer erheblichen Reduzierung der Leistungsmerkmale eines solchermaßen aufgebauten Prozessors. Andererseits ist es aufgrund der engen Speicherplatzbegrenzungen nicht oder nur schweren Herzens hinnehmbar, eine große Menge von Registerspeicherplatz brachliegen zu lassen.

Die EP 0 967 544 A3 offenbart einen digitalen Signalprozessor für Daten mit einer hohen Bitlänge. Befehle, die Daten manipulieren, umfassen einen Bitschalter in der Form eines 2-Bit-Feldes, dessen Status bewirkt, dass ein Befehl einmal ausgeführt wird, um ein einziges Datenwort zu verarbeiten, oder dessen Status bewirkt, dass ein Befehl wiederholt ausgeführt wird, da der Befehl auf eine Kette oder Liste von sequentiellen Daten ausgeführt wird, beispielsweise auf eine Datenkette, die eine Anzahl N von 16-Bit-Worten umfasst, wobei N eine Ganzzahl ist. Im Einzelnen umfasst der Prozessor 32 Akkumulatoren ACO bis AC31, die von einer 16-Bit-ALU gespeist werden, und die ihrerseits einen Spalten-Austausch-Block speisen. Wenn ein Kettenbefehl durch den Mikroprozessor ausgeführt wird, wird eine Adressenreferenz kopiert und dann nach-inkrementiert, um Vorbereitungen für ein nächstes Datenwort in der Kette zu treffen. Somit wird die Adressreferenz auf das niederstwertige Wort der Kette in dem Akkumulatoradressregister beibehalten, und diese Adressreferenz wird auf den Beginn der Kette zurückschnappen, und zwar für nachfolgende Kettenoperationen, die dieselbe Kette von Daten verwenden.

Die Aufgabe der vorliegenden Erfindung besteht darin, ein Konzept zur besseren Registernutzung zu schaffen.

Diese Aufgabe wird durch einen Prozessor gemäß Patentanspruch 1 oder durch ein Verfahren zum gleichzeitigen Ausführen einer Berechnung und eines Kopiervorgangs gemäß Patentanspruch 10 gelöst.

Der vorliegenden Erfindung liegt die Erkenntnis zugrunde, daß insbesondere bei einer modularen oder nichtmodularen Multiplikation und auch bei sonstigen Berechnungen, die in mehreren Berechnungszyklen ausgeführt werden, zumindest ein Operand, am Beispiel der Multiplikation der Multiplikator, in jedem Berechnungszyklus nicht immer in voller Länge benötigt wird, sondern nur portionsweise. Daher wird der portionsweise benötigte Operand, der in einem Quellregister gespeichert ist, zur Berechnung nicht insgesamt benötigt, sondern es wird in jedem Berechnungszyklus nur eine bestimmte Portion dieses Operanden benötigt und einem Rechenwerk zugeführt. Erfindungsgemäß wird eine Portion des Operanden, die ohnehin aus dem Quellregister geladen wird und dem Rechenwerk zugeführt wird, zusätzlich bereits in ein Zielregister geschrieben. Dies wird parallel zu den Berechnungszyklen durchgeführt, so daß nach einer Ausführung sämtlicher Berechnungszyklen für eine Berechnung nicht nur die Berechnung ausgeführt ist, sondern sich eine vollständige Kopie des portionsweise geladenen Operanden in dem Zielregister wiederfindet.

Erfindungsgemäß wird somit parallel zu einer Berechnung in mehreren Berechnungszyklen auch eine portionsweise Kopie von dem Quellregister in ein Zielregister durchgeführt. Der Kopierbefehl wird somit zeitlich parallel mit dem Berechnungsbefehl ausgeführt. Durch diese parallele Ausführung wird für den Kopierbefehl selbst kein zusätzlicher Maschinenzyklus benötigt. Der Kopierbefehl benötigt somit keine zusätzliche Zeit, die über die Zeit zur Ausführung der ohnehin nötigen zyklischen Berechnung hinausgeht.

Ein Vorteil der vorliegenden Erfindung besteht neben der Tatsache, daß der Kopierbefehl selbst keine Zeit benötigt, darin, daß der Vorgang des Kopierens hinter der Berechnung, wie z. B. einer Multiplikation, versteckbar ist, und dadurch nicht durch Leistungsprofilanalysen etc. herausgefunden werden kann. Dadurch wird durch das parallele Ablaufenlassen der Berechnung und des Kopierens ein erhöhter Sicherheitsstandard erreicht.

Ein weiterer Vorteil der vorliegenden Erfindung besteht darin, daß solche Operanden, die portionsweise verarbeitbar sind, wie z. B. der Multiplikator in einer Multiplikation, ohne zusätzlichen Zeitaufwand auch über den Datenbus, der typischerweise keine besonders hohe Breite hat, und beispielsweise nur 8 Bit breit ist, in beliebige Zielregister, die mit dem Datenbus verbunden sind, kopiert werden können, unabhängig davon, wie lange das Zielregister ist bzw. wie viele Maschinenzyklen für eine separate Kopie erforderlich sein würden.

Insbesondere in der Elliptische-Kurven-Kryptographie, bei der viele Multiplikationen mit vielen Multiplikatoren auszuführen sind, können auch Rechenwerksregister, die keine breitbandige Datenverbindung zu anderen Rechenwerksregistern haben, zum Speichern langer Operanden eingesetzt werden, so daß eine optimale Registerausnutzung ohne Performanceverlust für diese portionsweise zu verarbeitenden Operanden, wie z. B. Multiplikatoren, erreicht wird. Werden lediglich Rechenwerksregister für solche portionsweise zu verarbeitenden Operanden zusätzlich benötigt, so kann auch eine gegebenenfalls vorhandene breitbandige Datenverbindung zwischen zumindest einigen solcher Register abgeschaltet werden, um den Stromverbrauch des Rechenwerks zu minimieren. Trotz Abschaltung der breitbandigen Datenverbindung kann durch das erfindungsgemäße gleichzeitige Berechnen und Kopieren über den schmalbandigen Datenbus eine optimale Registerausnutzung erreicht werden. Die Bereitstellung zusätzlicher Register für die Elliptische-Kurven-Kryptographie entfällt somit, was wiederum den Vorteil hat, daß speziell Langzahlrechenwerke für verschiedene Anwendungen mit stark variierenden Schlüssellängen dennoch optimal nutzbar und für die entsprechende Aufgabe anpaßbar sind.

Bevorzugte Ausführungsbeispiele der vorliegenden Erfindung werden nachfolgend Bezug nehmend auf die beiliegenden Zeichnungen näher erläutert. Es zeigen:

Fig. 1    ein Blockschaltbild eines erfindungsgemäßen Prozessors;

Fig. 2    ein Ablaufdiagramm des erfindungsgemäßen Verfahrens;

Fig. 3a    ein konfigurierbares Langzahlrechenwerk, in dem das erfindungsgemäße Konzept einsetzbar ist;

Fig. 3b    eine Detaildarstellung einer Bit-Slice;

Fig. 4    ein Ablaufdiagramm des bekannten ZDN-Verfahrens zur modularen Multiplikation unter gleichzeitiger Verwendung eines Multiplikationsvorausschauverfahrens und eines Reduktionsvorausschauverfahrens.

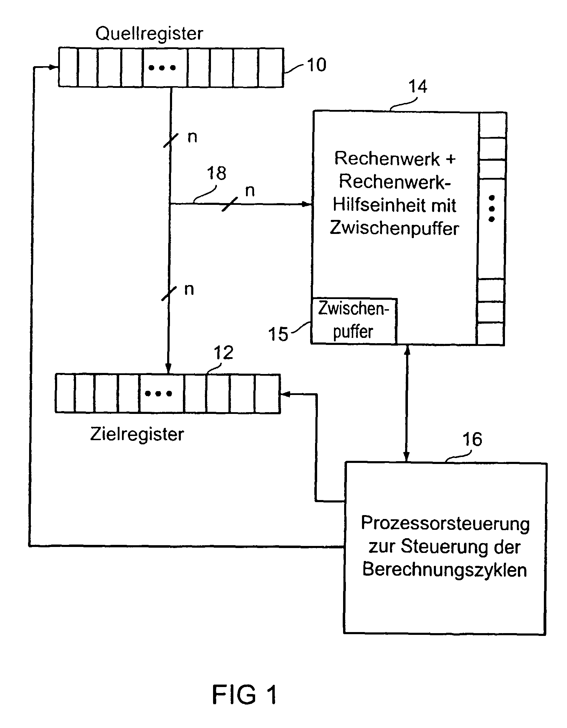

Fig. 1 zeigt einen erfindungsgemäßen Prozessor mit einem Quellregister 10, einem Zielregister 12, einem Rechenwerk 14, einer Prozessorsteuerung 16 und einem Datenbus 18 mit einer Datenbreite von n Bits. Die Datenbreite n des Datenbusses 18 ist typischerweise wesentlich kleiner als die Länge des Quellregisters 10 oder des Zielregisters 12 oder der Anzahl von Bit-Slices des Rechenwerks 14 und beträgt z. B. zwischen 8 und 32 Bits.

Der Datenbus 18 ist sowohl mit dem Quellregister 10 als auch dem Rechenwerk 14 und auch mit dem Zielregister 12 verbunden.

Das Rechenwerk 14 ist ausgebildet, um eine Berechnung unter Verwendung des Quellregisterinhalts durchzuführen, wobei die Berechnung in mehreren Berechnungszyklen ausführbar ist, und wobei in jedem Zyklus lediglich ein Teil des Quellregisterinhalts, also nur eine Portion variabler Größe des in dem Quellregister 10 gespeicherten Operanden, verwendbar ist.

Die Prozessorsteuerung 16 ist betreibbar, um vor einem Berechnungszyklus einen Teil des Quellregisterinhalts, der für diesen Berechnungszyklus benötigt wird, dem Rechenwerk 14 einerseits und - gemäß der vorliegenden Erfindung - dem Zielregister 12 andererseits über den Datenbus 18 zuzuführen, so daß nach einer Ausführung der mehreren Berechnungszyklen das Rechenwerk 14 das Ergebnis der Berechnung einerseits umfaßt, und daß andererseits in dem Zielregister 12 eine vollständige Kopie des Quellregisters 10 vorhanden ist. Am Beispiel der Multiplikation unter Verwendung eines Multiplikationsvorausschauverfahrens werden in einem ersten Berechnungszyklus z. B. die obersten 8 Bits des Quellregisters 10, in dem der Multiplikator steht, dem Rechenwerk 14 und insbesondere einer Rechenwerkhilfseinheit mit einem zwischen 20 und 30 Bit gro-βen Puffer, also einem kleinen Puffer, zugeführt. Die Rechenwerkhilfseinheit untersucht diesen Teil des Multiplikators, also die Portion der zugeführten Bits, um Verschiebungswerte für das Zwischenergebnis einerseits und einen Multiplikationsvorausschauparameter für den Abschnitt der Bits zu erzeugen. Unter Verwendung des berechneten Verschiebungswerts und des berechneten Multiplikationsvorausschauparameters, welche von der Rechenwerkhilfseinheit ermittelt worden sind, wird dann ein Berechnungszyklus durchgeführt, der typischerweise in einer Zwei-Operanden-Addition am Beispiel einer normalen Multiplikation oder einer Drei-Operanden-Addition am Beispiel einer modularen Multiplikation z. B. gemäß der im Block 950 von Fig. 4 gezeigten Berechnungsvorschrift durchzuführen ist.

Nachdem bei Multiplikationsvorausschauverfahren von vornherein nicht bekannt ist, wie viel Bits des Multiplikators auf einmal verarbeitet werden können, umfaßt die Rechenwerkhilfseinheit, wie es ausgeführt worden ist, ein z. B. 16 oder 24 Bit großes Pufferregister, was zunächst, bevor die Berechnung beginnt, mit den Multiplikatorbits portionsweise geladen wird. Während dieser portionsweisen Ladung des Pufferregisters der Rechenwerkhilfseinheit wird gleichzeitig gemäß der vorliegenden Erfindung auch das Zielregister nach und nach beschrieben. Werden also z. B. die ersten 8 Bit des Quellregisters in das Pufferregister der Rechenwerkhilfseinheit geschrieben, so werden diese 8 Bit auch in die oberen acht Registerspeicherplätze des Zielregisters geschrieben. Werden dann die nächsten 8 Bit des Quellregisters in das Pufferregister der Rechenwerkhilfseinheit geschrieben, so werden diese zweiten 8 Bits auch an die entsprechenden zweiten acht Speicherplätze des Zielregisters geschrieben. Irgendwann wird das Rechenwerk 14, wenn ein voller Pufferstand des Hilfspuffers der Rechenwerkhilfseinheit signalisiert ist, damit beginnen, die Multiplikation in Zyklen abzuarbeiten. Sobald ein kritischer Pufferstand im Zwischenpuffer der Rechenwerkhilfseinheit signalisiert wird, wird eine nächste Portion von Bits des Quellregisters in diesen Puffer geladen. Gleichzeitig wird dann, gemäß der vorliegenden Erfindung, diese Portion der Bits des Quellregisters auch in das Zielregister geladen.

Aus der vorstehenden Erläuterung wird ersichtlich, daß die Zielregisterbeladung nicht unbedingt völlig synchron zu den Berechnungszyklen ablaufen wird, sondern in erster Linie synchron zur Beladung des Zwischenpuffers der Rechenwerkhilfseinheit. Hat eine Rechenwerkhilfseinheit keinen derartigen Zwischenpuffer, d. h. werden bei einer Berechnung beispielsweise immer in jedem Berechnungszyklus dieselbe Anzahl von Bits des Quellregisterinhalts benötigt, so kann der Kopiervorgang vom Quellregister zum Zielregister auch synchron zu den Berechnungszyklen ablaufen.

Auf jeden Fall wird nach einer Ausführung der Berechnung nach mehreren Berechnungszyklen der komplette Inhalt des Quellregisters 10 über den lediglich n Bit breiten Datenbus 18 in das Zielregister 12 kopiert sein.

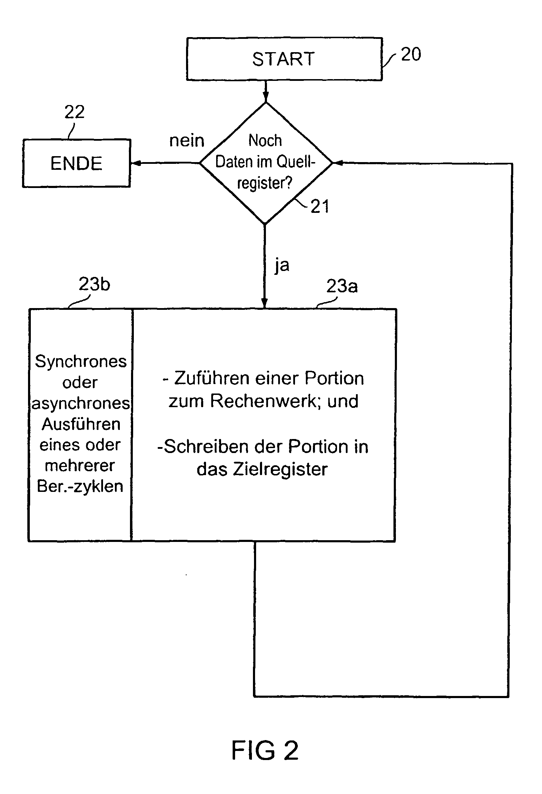

Im nachfolgenden wird anhand von Fig. 2 ein Ablaufdiagramm des erfindungsgemäßen Verfahrens zum gleichzeitigen Ausführen einer Berechnung und Durchführen eines Kopiervorgangs dargestellt. Das Konzept beginnt in einem Block 20. In einem Entscheidungsblock 21 wird festgestellt, ob noch Daten im Quellregister vorhanden sind, die dem Rechenwerk 14 zuzuführen sind. Wird diese Frage mit "Nein" beantwortet, so ist das Verfahren beendet (22). Wird diese Frage dagegen mit "Ja" beantwortet, so wird zunächst in einem Block 23a eine Portion des Quellregisterinhalts dem Rechenwerk (14 in Fig. 1) zugeführt. Gleichzeitig wird die Portion auch in das Zielregister (12 in Fig. 1) geschrieben. Parallel hierzu wird von dem Rechenwerk einer oder mehrere Berechnungszyklen ausgeführt (Block 23b). Das Ausführen in dem Block 23b findet entweder synchron zum Zuführen der Portionen zum Rechenwerk oder asynchron hierzu statt. Bei dem in Fig. 1 gezeigten Ausführungsbeispiel, bei dem in dem Rechenwerk und insbesondere in der Hilfseinheit des Rechenwerks ein Zwischenpuffer (15 in Fig. 1) vorhanden ist, findet die Berechnung in mehreren Berechnungszyklen zwar parallel zum portionsweisen Zuführen und Laden in das Zielregister statt, jedoch asynchron hierzu.

Die Entkopplung zwischen den zugeführten Bits einerseits, die typischerweise als feste Portionen zugeführt werden, und den von dem Rechenwerk 14 in einem Berechnungszyklus tatsächlich "verbrauchten" Bits eines Multiplikators, die pro Berechnungszyklus nicht fest sind, sondern, wie es für Vorausschaualgorithmen bekannt ist, von der Art der Multiplikatorbits abhängt, liefert der Puffer der Rechenwerkhilfseinheit. Wenn die Multiplikatorbits für das Vorausschauverfahren günstig sind, so können in einem Berechnungszyklus tatsächlich acht Multiplikatorbits, also eine Portion, die vom Quellregister geladen wird, verarbeitet werden. Sind die Multiplikatorbits dagegen für das Vorausschauverfahren ungünstig, so kann durchaus auch der Fall auftreten, daß lediglich ein oder zwei Multiplikatorbits in einem Berechnungszyklus abgearbeitet bzw. "verbraucht" werden. In diesem Fall werden die Portionen des Quellregisterinhalts in den Zwischenpuffer 15 von Fig. 1 eingespeist, der die portionsweise Ladung von Multiplikatorbits in das Rechenwerk, die in festen Portionen stattfindet, von dem "Verbrauchen" der Bits in den einzelnen Berechnungszyklen entkoppelt. Dennoch wird das portionsweise Laden des Quellregisterinhalts in aufeinanderfolgenden Schritten parallel zum Durchführen der Berechnung in aufeinanderfolgenden Berechnungszyklen durchgeführt, wobei die Berechnungszyklen und das portionsweise Laden in bestimmten Fällen durchaus synchron sein wird, im Falle der Multiplikation jedoch aufgrund der inhärenten Asynchronität von Multiplikationsvorausschaualgorithmen asynchron sein wird.

Das Quellregister kann im Falle einer Multiplikation auch außerhalb des Rechenwerks 14 angeordnet sein. Dies ist jedoch nicht unbedingt nötig. Das Quellregister kann selbstverständlich auch eines der Register 38a, 37a, 38b, 37b in Fig. 3b sein. Dasselbe gilt für das Zielregister. Auch das Zielregister muß nicht unbedingt im Rechenwerk sein, wobei dies jedoch im Falle des konfigurierbaren Rechenwerks meistens der Fall sein wird. Auf jeden Fall ist es nötig, daß das Quellregister und das Zielregister über den Datenbus 34 miteinander verbunden sind.

Insbesondere für die Ausführung einer Multiplikation von zwei Operanden wird der Multiplikator portionsweise gemäß der Bitbreite des Datenbusses 34 gelesen und über den Datenbus in die Rechenwerkhilfseinheit, die auch als Controller bezeichnet wird, geschrieben, wo diese Portion durch den Multiplikationsalgorithmus ausgewertet wird. Erfindungsgemäß wird gleichzeitig der bereits auf dem Datenbus 34 (Fig. 3a) bzw. 18 (Fig. 1) liegende Wert in ein beliebiges anderes verfügbares Register geschrieben. Parallel zur Multiplikation wird also der abzuscannende Multiplikator auch in ein anderes Register kopiert. Damit werden lange Register für portionsweise verarbeitete Operanden trotz der Tatsache, daß auf sie nur über einen Bus mit kleiner Bandbreite zugegriffen werden kann, zur Verfügung gestellt und vollständig nutzbar, wobei der Kopiervorgang ohne zusätzlichen Zeitverlust erfolgt. Zusätzlicher Aufwand muß lediglich für die Prozessorsteuerung 16 von Fig. 1 aufgewendet werden, um das Zielregister 12 derart zu manipulieren, daß es die auf dem Datenbus 18 von Fig. 1 anliegenden Quellregisterinhaltportionen an entsprechenden Registerplätzen speichert.

Bezugszeichenliste

| | |
|---|---|
| 10 | Quellregister |
| 12 | Zielregister |
| 14 | Rechenwerk |
| 15 | Zwischenpuffer |
| 16 | Prozessorsteuerung |
| 18 | Datenbus |
| 20 | Start |
| 21 | zu verarbeitende Daten vorhanden? |
| 22 | Ende |
| 23a | Zuführen einer Portion zum Rechenwerk und Schreiben in das Zielregister |
| 23b | Ausführen der Berechnungszyklen |
| 30a | erstes Teilrechenwerk |
| 30b | zweites Teilrechenwerk |
| 31 | Übertragleitung |
| 32 | Konfigurationsschalter |
| 33 | breitbandiger innerer Datenbus |
| 34 | schmalbandiger äußerer Datenbus |
| 35a | erster Multiplexer |
| 35b | zweiter Multiplexer |
| 36a | benutzter Teil des ersten Teilrechenwerks |
| 36b | benutzter Teil des zweiten Teilrechenwerks |
| 37a | Register im nicht benutzten Teil |
| 37b | Register im nicht benutzten Teil |
| 38a | Register im nicht benutzten Teil |
| 38b | Register im nicht benutzten Teil |
| 900 | Start des ZDN-Algorithmus |
| 910 | Multiplikations-Look-Ahead-Algorithmus |
| 920 | Zwischenergebnis-Verschiebung |
| 930 | Reduktions-Look-Ahead-Algorithmus |
| 940 | Modulverschiebung |
| 950 | 3-Operanden-Operation |
| 960 | Ende des ZDN-Algorithmus |

**Patentansprüche**

1. Prozessor mit folgenden Merkmalen:

   einem Quellregister (10) mit einem Quellregisterinhalt;
   einem Zielregister (12);
   einem Rechenwerk (14) zum Durchführen einer Berechnung unter Verwendung des Quellregisterinhalts, wobei die Berechnung in, mehreren Berechnungszyklen ausführbar ist und wobei in jedem Zyklus lediglich ein Teil des. Quellregisterinhalts verwendbar ist, wobei das Rechenwerk (14) eine Rechenwerkhilfseinheit mit einem Zwischenpuffer (15) und einen Bit-Slice-Stapel aufweist, wobei der Zwischenpuffer (15) eine kleinere Speicherkapazität als das Quellregister (10) oder das Zielregister (12) aufweist ;
   einem Datenbus (18), der mit dem Quellregister (10), dem Zielregister (12) und dem Rechenwerk (14) verbunden ist; und
   einer Prozessorsteuerung (16), die betreibbar ist, um während der Berechnung den Quellregisterinhalt in Portionen dem Rechenwerk (14) einerseits und dem Zielregister (12) andererseits über den Datenbus (18) zuzuführen, so dass nach einer Ausführung der mehreren Berechnungszyklen der Quellregisterinhalt in das Zielregister gebracht ist, wobei die Prozessorsteuerung (16) ausgebildet ist, um den Zwischenpuffer (15) der Rechenwerkhilfseinheit mit einer neuen Portion des Quellregisterinhalts zu füllen, wenn ein Laden-Steuersignal von dem Zwischenpuffer (15) erhalten wird.

2. Prozessor gemäß Anspruch 1, bei dem das Quellregister (10) und das Zielregister (12) eine Registerlänge haben, diegrößer ist als eine Datenbreite (n) des Datenbusses (18).

3. Prozessor gemäß Anspruch 1 oder 2, bei dem das Rechenwerk (14) eine Anzahl von Bit-Slices aufweist, die größer als 64 Bit ist.

4. Prozessor gemäß einem der vorhergehenden Ansprüche, bei dem eine Bit-Slice des Bit-Slice-Stapels eine arithmetische Einheit und ein Bit von einem oder mehreren internen Rechenwerkregistern aufweist, wobei ein Register für ein Zwischenergebnis (Z) in jedem Berechnungszyklus aktualisierbar ist.

**5.** Prozessor gemäß Anspruch 4,
bei dem das Rechenwerk (14) konfigurierbar ist, um für die Durchführung der Berechnung lediglich einen Teil der Anzahl von Bit-Slices zu verwenden, und bei dem Bits des einen oder der mehreren internen Rechenwerkregister in den Bit-Slices, die nicht für die Durchführung der Berechnung verwendet werden, das Quellregister (37a, 37b, 38a, 38b) bilden, auf das durch den Datenbus zugreifbar ist.

**6.** Prozessor gemäß einem der vorhergehenden Ansprüche,
bei dem die Berechnung eine Multiplikation eines Multiplikanden und eines Multiplikators umfasst, bei dem der Multiplikator in dem Quellregister (10) gespeichert ist, auf das durch den Datenbus (18) zugegriffen werden kann,
bei dem der Multiplikand in einem in dem Rechenwerk (14) ausgebildeten Multiplikandenregister (C) gespeichert ist, und
bei dem in jedem Berechnungszyklus eine Anzahl von Bits des Multiplikators durch das Rechenwerk abgearbeitet werden, und parallel zu der Abarbeitung der Multiplikatorbits Portionen von Multiplikatorbits dem Rechenwerk zugeführt werden.

**7.** Prozessor gemäß Anspruch 6,
bei dem das Zwischenergebnisregister in jedem Berechnungszyklus unter Verwendung der dem Rechenwerk zugeführten Bits des Multiplikators aktualisierbar ist.

**8.** Prozessor gemäß Anspruch 6 oder 7,
bei dem die Multiplikation eine modulare Multiplikation bezüglich eines Moduls ist, wobei für den Modul ein in dem Rechenwerk ausgebildetes Modulregister vorgesehen ist.

**9.** Verfahren zum gleichzeitigen Ausführen einer Berechnung durch ein Rechenwerk (14) unter Verwendung eines Quellregisterinhalts, der in einem Quellregister (10) gespeichert ist, und eines Kopiervorgangs, durch den der Quellregisterinhalt in ein Zielregister (12) kopiert wird, wobei die Berechnung in mehreren Berechnungszyklen ausführbar ist, und wobei in jedem Zyklus lediglich ein Teil des Quellregisterinhalts verwendbar ist, wobei das Rechenwerk (14) eine Rechenwerkhilfseinheit mit einem Zwischenpuffer (15) und einen Bit-Slice-Stapel aufweist, wobei der Zwischenpuffer (15) eine kleinere Speicherkapazität als das Quellregister (10) oder das Zielregister (12) aufweist, mit folgenden Schritten:

während der Berechnung in mehreren Berechnungszyklen, Zuführen des Quellregisterinhalts in Portionen zu dem Rechenwerk, um die mehreren Berechnungszyklen auszuführen, und Schreiben der Portionen des Quellregisterinhalts nacheinander in das Zielregister, so dass nach einer Durchführung der Berechnung das Ergebnis der Berechnung erhalten wird und eine Kopie des Quellregisterinhalts in dem Zielregister (12) erhalten wird, wobei der Schritt des Zuführens so ausgeführt wird, dass der Zwischenpuffer (15) der Rechenwerkhilfseinheit mit einer neuen Portion des Quellregisterinhalts gefüllt wird, wenn ein Laden-Steuersignal von dem Zwischenpuffer (15) erhalten wird.

**Claims**

**1.** A processor, comprising:

a source register (10) having a source register content;
a destination register (12);
a calculating unit (14) for performing a calculation using the source register content, wherein the calculation is performable in several calculation cycles and wherein in each cycle only one part of the source register content is usable, wherein the calculating unit (14) comprises a calculating unit auxiliary device having an intermediate buffer (15) and a bit-slice staple, wherein the intermediate buffer (15) comprises a smaller memory capacity than the source register (10) or the destination register (12);
a data bus (18) which is connected to the source register (10), the destination register (12) and the calculating unit (14); and
a processor controller (16) which is operable during the calculation to supply the source register content in portions to the calculating unit (14) on the one hand and to the destination register (12) on the other hand via the data bus (18), so that after an execution of the several calculation cycles the source register content is brought into the destination register, wherein the processor controller (16) is implemented to fill the intermediate buffer (15) of the calculating unit auxiliary device with a new portion of the source register content when a load control signal is received from the intermediate buffer (15).

**2.** The processor according to claim 1, wherein the source register (10) and the destination register (12) have a register length which is larger than a data width (n) of the data bus (18).

**3.** The processor according to claim 1 or 2,
wherein the calculating unit (14) comprises a number of bit-slices which is larger than 64 bits.

**4.** The processor according to one of the preceding claims,

wherein a bit-slice of the bit-slice staple comprises an arithmetic unit and a bit from one or several internal calculating unit registers, wherein a register for an intermediate result (Z) may be updated in each calculation cycle.

5. The processor according to claim 4,
wherein the calculating unit (14) is configurable to use only one part of the number of bit-slices for performing the calculation, and
wherein the bits of the one or the several internal calculating unit registers in the bit-slices which are not used for the execution of the calculation form the source register (37a, 37b, 38a, 38b) which may be accessed through the data bus.

6. The processor according to one of the preceding claims,
wherein the calculation includes a multiplication of a multiplicand and a multiplier,
wherein the multiplier is stored in the source register (10) which may be accessed through the data bus (18),
wherein the multiplicand is stored in a multiplicand register (C) implemented in the calculating unit (14), and
wherein in every calculation cycle a number of bits of the multiplier are processed by the calculating unit and wherein in parallel to the processing of the multiplier bits portions of multiplier bits are supplied to the calculating unit.

7. The processor according to claim 6,
in which the intermediate result register in each calculation cycle may be updated using the bits of the multiplier supplied to the calculating unit.

8. The processor according to claim 6 or 7,
wherein the multiplication is a modular multiplication with reference to a modulus, wherein for the modulus a modulus register implemented in the calculating unit is provided.

9. A method for a simultaneous execution of a calculation by a calculating unit (14) using a source register content stored in a source register (10), and a copying process by which the source register content is copied into a destination register (12), wherein the calculation is performable in several calculation cycles and wherein in each cycle only one part of the source register content is useable, wherein the calculating unit (14) comprises a calculating unit auxiliary device having an intermediate buffer (15) and a bit-slice staple, wherein the intermediate buffer (15) comprises a smaller memory capacity than the source register (10) or the destination register (12), comprising:

during the calculation in several calculation cycles, supplying the source register content in portions to the calculating unit to perform the several calculation cycles, and writing the portions of the source register content into the destination register in sequence, so that after an execution of the calculation the result of the calculation is obtained and a copy of the source register content in the destination register (12) is obtained,

wherein the step of supplying is performed so that the intermediate buffer (15) of the calculating unit auxiliary device is filled with a new portion of the source register content when a load control signal is received from the intermediate buffer (15).

**Revendications**

1. Processeur aux caractéristiques suivantes :

un registre de source (10) avec un contenu de registre de source ;
un registre cible (12) ;
une unité de calcul (14) destinée à effectuer un calcul à l'aide du contenu de registre de source, le calcul pouvant être effectué en plusieurs cycles de calcul et à chaque cycle pouvant être utilisée uniquement une partie du contenu de registre de source, l'unité de calcul (14) présentant une unité auxiliaire d'unité de calcul avec un tampon intermédiaire (15) et une pile de tranches de bits, le tampon intermédiaire (15) présentant une plus petite capacité de mémoire que le registre de source (10) ou le registre cible (12) ;
un bus de données (18) qui est relié (14) au registre de source (10), au registre cible (12) et à l'unité de calcul ; et
une commande de processeur (16) qui est opérative pour alimenter, pendant le calcul, le contenu de registre par portions à l'unité de calcul (14), d'une part, et le registre cible (12), d'autre part, par l'intermédiaire du bus de données (18), de sorte que, après une exécution des plusieurs cycles de calcul, le contenu de registre de source soit amené dans le registre cible, la commande de processeur (16) étant réalisée de manière à remplir le tampon intermédiaire (15) de l'unité auxiliaire d'unité de calcul d'une nouvelle portion du contenu de registre de source lorsqu'il est reçu un signal de commande de chargement du tampon intermédiaire (15).

2. Processeur selon la revendication 1, dans lequel le registre de source (10) et le registre cible (12) ont une longueur de registre qui est plus grande qu'une largeur de données (n) du bus de données (18).

**3.** Processeur selon la revendication 1 ou 2, dans lequel l'unité de calcul (14) présente un nombre de tranches de bits qui est supérieur à 64 bits.

**4.** Processeur selon l'une des revendications précédentes, dans lequel une tranche de bits de la pile de tranches de bits présente une unité arithmétique et un bit d'un ou de plusieurs registres d'unité de calcul internes, un registre de résultat intermédiaire (Z) pouvant être mis à jour à chaque cycle de calcul.

**5.** Processeur selon la revendication 4, dans lequel l'unité de calcul (14) est configurable de manière à n'utiliser pour la réalisation du calcul qu'une partie du nombre de tranches de bits, et dans lequel des bits de l'un ou des plusieurs registres d'unité de calcul internes constituent dans les tranches de bits qui ne sont pas utilisés pour l'exécution du calcul le registre de source (37a, 37b, 38a, 38b) auquel peut être accédé par le bus de données.

**6.** Processeur selon l'une des revendications précédentes, dans lequel le calcul comprend une multiplication d'un multiplicande et d'un multiplicateur, dans lequel le multiplicateur est mémorisé dans le registre de source (10) auquel peut être accédé par le bus de données (18), dans lequel le multiplicande est mémorisé dans un registre de multiplicande (C) réalisé dans l'unité de calcul (14), et dans lequel un nombre de bits du multiplicateur est traité à chaque cycle de calcul par l'unité de calcul, et en parallèle avec le traitement des bits de multiplicateur, des portions de bits de multiplicateur sont alimentées vers l'unité de calcul.

**7.** Processeur selon la revendication 6, dans lequel le registre de résultat intermédiaire peut être mis à jour à chaque cycle de calcul à l'aide des bits du multiplicateur alimentés vers l'unité de calcul.

**8.** Processeur selon la revendication 6 ou 7, dans lequel la multiplication est une multiplication modulaire en ce qui concerne un module, pour le module étant prévu un registre de module réalisé dans l'unité de calcul.

**9.** Procédé pour la réalisation simultanée d'un calcul par une unité de calcul (14) à l'aide d'un contenu de registre de source mémorisé dans un registre de source (10), et d'une opération de copie par laquelle le contenu de registre de source est copié dans un registre cible (12), le calcul pouvant être réalisé en plusieurs cycles de calcul, et à chaque cycle pouvant être utilisée uniquement une partie du contenu de registre de source, l'unité de calcul (14) présentant une unité auxiliaire d'unité de calcul avec un tampon intermédiaire (15) et une pile de tranches de bits, le tampon intermédiaire (15) présentant une plus petite capacité de mémoire que le registre de source (10) ou le registre cible (12), aux étapes suivantes consistant à :

pendant le calcul en plusieurs cycles de calcul, alimenter le contenu de registre de source en portions vers l'unité de calcul, pour effectuer les plusieurs cycles de calcul, et écrire les portions du contenu de registre de source successivement dans le registre cible, de sorte qu'après une réalisation du calcul soit obtenu le résultat du calcul et que soit obtenue une copie du contenu de registre de source dans le registre cible (12),

l'étape d'alimentation étant réalisée de sorte que le tampon intermédiaire (15) de l'unité auxiliaire d'unité de calcul soit rempli d'une nouvelle portion du contenu de registre de source lorsqu'il est reçu un signal de chargement du tampon intermédiaire (15).

Quellregister

10

14

Rechenwerk +
Rechenwerk-
Hilfseinheit mit
Zwischenpuffer

18

n

n

n

Zwischenpuffer

15

12

Zielregister

16

Prozessorsteuerung
zur Steuerung der
Berechnungszyklen

FIG 1

START — 20

22

ENDE    nein    Noch
                Daten im Quell-
                register?
                              — 21

                ja

23b                           23a

Synchrones    - Zuführen einer Portion
oder            zum Rechenwerk; und
asynchrones
Ausführen     -Schreiben der Portion in
eines oder      das Zielregister
mehrerer
Ber.-zyklen

FIG 2

innerer Bus, Verbindung
für jede BIT-SLICE

33

35a

30b

35b

36a

36b

BIT-SLICE i

BIT-SLICE k

38a

38b

37a

37b

30a

Register
CR$_1$

31

32

Register
CR$_1$

$n$

$n$

Datenbus

34

$n$

$n$

RW-Konfiguration

FIG 3A

Carry-Out

BIT-SLICE i :

| C$_i$ | N$_i$ | Z$_i$ | CI$_{1i}$ | CI$_{2i}$ | AU$_i$ |
|---|---|---|---|---|---|

Carry-In

FIG 3B

START —900

M, C, N

Z := 0

LA := 0

m := L(M)

n := 0

GEN_Mult_LA (a, sz)         GEN_Mod_LA (b, sN) —930

910

SHL Z, sz         SHL Z, sN —940

920

Z         N

Z := Z+a·C+b·N

950

m=0 AND n=0?         NEIN

JA

Z < 0 ?         NEIN

JA

Z := Z+N

Z

STOPP

960

FIG 4 (Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3631992 C2

- EP 0967544 A3